# EUROPÄISCHE PATENTSCHRIFT

(11) **EP 2 379 908 B1**
(45) Veröffentlichungstag und Bekanntmachung des Hinweises auf die Patenterteilung: **10.09.2014**
(21) Anmeldenummer: 09812450.6
(22) Anmeldetag: 08.12.2009
(51) Int. Cl.: F16D 3/223

(54) **ANTRIEBSGELENK UND GELENKWELLE**
UNIVERSAL JOINT AND CARDAN SHAFT
JOINT ARTICULÉ DE TRANSMISSION ET ARBRE ARTICULÉ

(30) Priorität: 20.01.2009 DE 102009005544
(43) Veröffentlichungstag der Anmeldung: 26.10.2011
(73) Patentinhaber: Shaft-Form-Engineering GmbH, 77756 Hausach (DE)
(72) Erfinder: LANGER, Gerd, 39345 Bülstringen (DE); DISSER, Claus, 63500 Seligenstadt (DE); SZENTMIHÀLYI, Volker, 77793 Gutach (DE)
(74) Vertreter: Schmidt, Oliver Jürgen
(86) Internationale Anmeldenummer: PCT/DE2009/001736
(87) Internationale Veröffentlichungsnummer: WO 2010/083793

(56) Entgegenhaltungen:
- WO-A1-03/074893
- WO-A2-2005/056327
- US-A1- 2007 026 954

## Beschreibung

Die Erfindung betrifft ein Antriebsgelenk zur dreh- und axialfesten, jedoch eine begrenzte Winkelbewegung zulassenden Verbindung zwischen zwei Bauteilen, insbesondere im Antriebsstrang eines Kraftfahrzeugs, mit einer Innennabe als Gelenkinnenteil, eine Außennabe als Gelenkaußenteil sowie zwischen diesen vorgesehenen Drehmomentübertragungsmitteln als weitere Gelenkteile. Weiter betrifft die Erfindung eine Gelenkwelle mit wenigstens einem derartigen Antriebsgelenk,

Ein gattungsgemäßes Gegenbahngelenk für Längs-, Seiten- oder Lenkungswellen von Kraftfahrzeugen offenbart die WO 03/074893 A1.

Ein derartiges Antriebsgelenk ist ebenfalls aus der WO 2005/056327 bekannt. Bei diesem Antriebsgelenk wird bei Überschreiten einer definierten Axialkraft die Innennabe und/oder Außennabe derart deformiert, dass die Innennabe aus der Außennabe ausrasten kann. Diese Lösung hat sich als besonders vorteilhaft herausgestellt. Allerdings ist es hierzu erforderlich, dass die Materialeigenschaften der Innennabe und/oder der Außennabe derart aneinander angepasst werden, dass bei einer definierten Axialkraft, wie sie beispielsweise bei einem Frontalzusammenstoß auftritt, die Gelenkteile ausrasten können, so dass sich die mit dem Gelenk verbundenen Wellenteile teleskopartig ineinanderschieben können. In einigen speziellen Anwendungsfällen kann sich eine derartige Auslegung der Gelenkteile als unvorteilhaft erweisen.

Weiter ist aus der DE 199 43 880 C1 ein Antriebsgelenk einer Gelenkwelle bekannt, wobei der Käfig des Antriebsgelenks als eine Sollbruchstelle ausgebildet ist Wirkt auf die Gelenkwelle bei einem Unfall eine hohe Axialkraft, so wird der Käfig und damit das Antriebsgelenk zerstört. Die Innennabe kann dann relativ zu der Außennabe verschoben werden. Auch diese Lösung führt zu einer bei einem Frontalzusammenstoß erwünschten axialen Verkürzung der Antriebsordnung, die ein seitliches Wegknicken und insbesondere ein Eindringen von möglicherweise rotierenden Teilen der Antriebsanordnung in den Fahrzeuginnenraum vermeidet. Allerdings treten bei der Zerstörung des Käfigs Bruchteile auf, die im ungünstigsten Fall ebenfalls in den Fahrzeuginnenraum eintreten und Passagiere verletzen können, insbesondere aber das Antriebsgelenk sowie die Gelenkwelle blockieren, wodurch weitere die Fahrzeuginsassen gefährdende Zustände der Gelenkwelle auftreten können.

Demgegenüber ist es eine Aufgabe der vorliegenden Erfindung, ein Antriebsgelenk der eingangs genannten Art bereitzustellen, das bei einem Unfall, insbesondere einem Frontalzusammenstoß, eine besonders hohe Sicherheit für die Fahrzeuginsassen bietet.

Diese Aufgabe wird erfindungsgemäß dadurch gelöst, dass das Antriebsgelenk derart ausgebildet ist, dass die Außennabe bei Überschreiten einer bestimmten Axialkraft auf das Antriebsgelenk nur an einer Stelle, welche als Sollbruchstelle ausgestaltet ist, derart vollständig durchbricht, dass ein zumindest näherungsweise in radialer Richtung verlaufender Riss in der Außennabe entsteht, der ein Ausrasten der Innennabe aus der Außennabe ermöglicht, wobei die Außennabe beim Überschreiten der bestimmten Axialkraft auf das Antriebsgelenk im Übrigen sich aufweitet, und dass das Gelenk derart ausgebildet ist, dass sich der Riss in der Außennabe nach dem Ausrasten der Innennabe aus der Außennabe wieder schließt. Der beispielsweise bei einem Frontalzusammenstoß entstehende Riss in der Außennabe muss dabei nicht in einer exakt zu der Rotationsachse der Außennabe parallelen, radialen Ebene verlaufen, sondern kann ein unregelmäßiges und/oder zerklüftetes Bruchbild aufweisen. Die Außennabe ist dabei derart gestaltet, dass diese nur an einer Stelle vollständig durchbricht und im Übrigen sich aufweitet. Die Außennabe bleibt somit als ein Bauteil bestehen, so dass die Gefahr umher fliegender und/oder den Antriebsstrang blockierender Bruchstücke vermieden wird. Das Ausrasten der Gelenkteile ermöglicht, dass die mit dem Gelenk verbundenen Bauteile, bspw. Teilabschnitt einer Antriebswelle, teleskopartig ineinander geschoben werden. Dies vermindert die Gefahr des Ausknickens einer solchen Welle erheblich.

In Weiterbildung dieses Erfindungsgedankens ist es vorgesehen, dass zumindest die Außennabe in einem diese wenigstens bereichsweise umgreifenden Mitnehmergehäuse aufgenommen ist, wobei das Mitnehmergehäuse derart ausgebildet ist, dass es sich während des Ausrastens der Innennabe aus der Außennabe aufweitet. Mit anderen Worten sorgt das Mitnehmergehäuse zusätzlich dafür, dass die Außennabe nicht in viele kleine Bruchstücke zerbricht bzw. hält diese Bruchstücke derart zusammen, dass der Antriebsstrang nicht blockiert und die Fahrzeuginsassen nicht gefährdet werden. Dabei wird es besonders bevorzugt, wenn das Mitnehmergehäuse während des Ausrastens der Innennabe aus der Außennabe nur elastisch oder plastisch verformt wird, zumindest jedoch nicht zerbricht.

Eine Sollbruchstelle kann durch eine zur Drehmomentübertragung dienende Profilierung der Außennabe und/oder durch wenigstens eine Kerbstelle der Au-ßennabe gebildet sein. Zur Drehmomentübertragung zwischen der Innennabe und der Außennabe sind vorzugsweise mehrere in Laufbahnen der Außennabe und der Innennabe aufgenommene und ggf. in einem Käfig geführte Kugeln vorgesehen. Diese Laufbahnen bilden üblicherweise Stellen in der Außennabe mit geringerem Querschnitt, so dass hierdurch Sollbruchstellen entstehen. Weiter kann die Außennabe zur Drehmomentübertragung mit dem Mitnehmergehäuse eine Rillen und/oder Vorsprünge aufweisende Profilierung aufweisen, die ebenfalls geschwächte und als Sollbruchstellen dienende Bereiche bildet. Wenn das Antriebsgelenk als ein Gegenbahngelenk mit beidseits der Laufbahnen angeordneten Käfigzentrierungsflächen ausgebildet ist, können zwischen den entgegengesetzten Käfigzentrierungsflächen, d.h. etwa mittig zwischen den Laufbahnen, Kerbstellen auf der Innenseite der Außennabe ausgebildet sein, die ebenfalls als Sollbruchstellen dienen können. Derartige Kerbstellen können auch im Bahngrund der Laufbahnen für die Kugeln vorgesehen sein.

Es wird besonders bevorzugt, wenn die Außennabe derart ausgebildet ist, dass sie sich zusätzlich zu dem wenigstens einen Riss bei Überschreiten einer bestimmten Axialkraft auf das Antriebsgelenk derart aufweitet, dass die Innennabe zusammen mit den Drehmomentübertragungsmitteln aus der Außennabe ausrasten kann. Dies ermöglicht es, dass das Antriebsgelenk sowie die ggf. mit diesem verbundenen Bestandteile des Antriebsstrangs teleskopartig ineinander verschoben werden können, wodurch ein Ausknicken und damit eine Gefährdung von Fahrzeuginsassen während eines Unfalls vermieden wird.

Um ein Blockieren des Antriebsgelenks und des Antriebsstrangs bei einem Unfall zu verhindern, wird es besonders bevorzugt, wenn das Gelenk derart ausgebildet ist, dass die Innennabe und/oder die Drehmomentübertragungsmittel zerstörungsfrei aus der Außennabe ausrasten. Unter "zerstörungsfrei" wird in diesem Zusammenhang sowohl ein Ausrasten der Innennabe bzw. der Drehmomentübertragungsmittel verstanden, nach welchem diese in einem etwa dem Betriebszustand entsprechenden unbeschädigten Zustand vorliegen. Der Begriff "zerstörungsfrei" schließt in diesem Zusammenhang jedoch nicht kleinere plastische Verformungen an der Innennabe und/oder den Drehmomentübertragungsmitteln aus.

Wenn die Deformation der Außennabe sowie ggf. des Mitnehmergehäuses bei Überschreiten der definierten Axialkraft bei einem Unfall im Wesentlichen elastisch ist, kann sich der wenigstens eine Riss in der Außennabe nach dem Ausrasten der Innennabe aus der Außennabe wieder verschließen. Die Außennabe bleibt somit auch nach dem Bruch zumindest näherungsweise intakt und kann die sich ineinander schiebenden Bereiche des Antriebsstrangs zusätzlich stabilisieren.

Nach einer bevorzugten Ausführungsform ist die Außennabe derart ausgelegt, dass diese bei Auftreten einer Axialkraft zwischen etwa 7 KN und etwa 60 KN bricht. Besonders bevorzugt tritt das erfindungsgemäße definierte Versagen der Außennabe bei einer axialen Kraft von etwa 10 KN bis etwa 40 KN auf.

Die der Erfindung zugrunde liegende Idee kann insbesondere bei einem als Gegenbahngelenk ausgebildeten Festgelenk realisiert werden. Ein solches Gegenbahngelenk weist sowohl in der Innennabe als auch in der Außennabe abwechselnd um den Umfang verteilte erste und zweite Laufbahnen auf, deren Bahngrund sich in unterschiedlicher axialer Richtung der Rotationsachse des Antriebsgelenks annähert. Erste Laufbahnen der Innennabe sind dabei ersten Laufbahnen der Außennabe derart zugeordnet, dass diese sich in die gleiche Richtung öffnen. In jedem der Laufbahnpaare ist dabei genau eine Kugel aufgenommen, die ein Drehmoment zwischen der Innennabe und der Außennabe überträgt. Die Kugeln können in einem Käfig, der zwischen der Innennabe und der Außennabe angeordnet ist, geführt sein.

Die Erfindung betrifft weiter eine Gelenkwelle mit wenigstens einem Antriebsgelenk der zuvor beschriebenen Art. Bei der Gelenkwelle kann es sich insbesondere um eine Fahrzeuglängswelle handeln, die aus zwei beispielsweise rohrartigen Wellenteilen zusammengesetzt ist. Das erfindungsgemäße Antriebsgelenk kann dabei als Mittengelenk zur Verbindung zwischen den beiden Wellenteilen vorgesehen sein, so dass bei einem Unfall nach der Zerstörung des Antriebgelenks die beiden Wellenteile teleskopartig ineinander geschoben werden können. Hierzu weisen die beiden rohrförmigen Wellenteile vorzugsweise unterschiedliche Durchmesser auf.

Die Erfindung wird nachfolgend unter Bezugnahme auf ein Ausführungsbeispiel und die Zeichnung näher erläutert.

Es zeigen schematisch:
- Figur 1: einen Schnitt durch ein erfindungsgemäßes Antriebsgelenk und
- Figur 2: die Außennabe des Antriebsgelenks nach Figur 1 bei Überschreiten einer definierten Axialkraft auf das Antriebsgelenk.

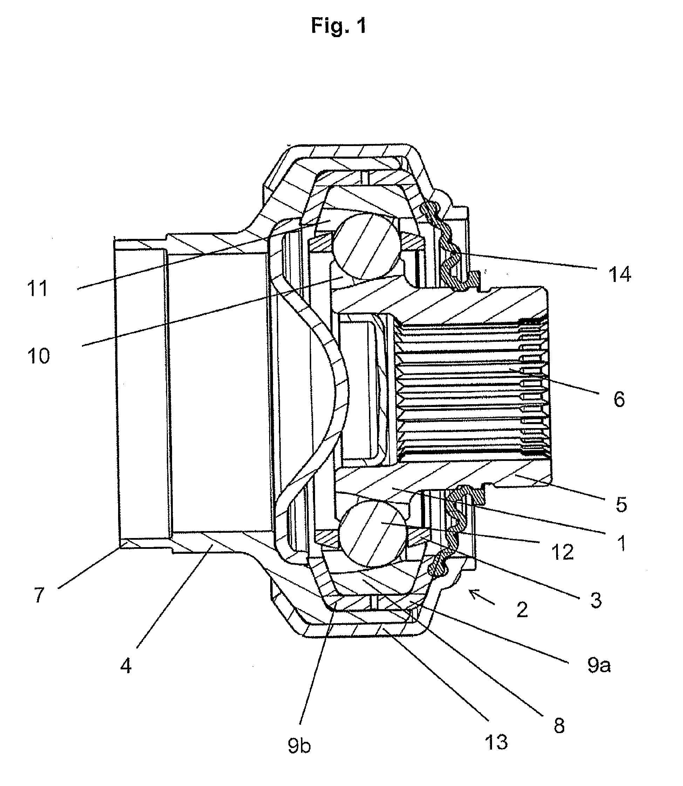

Das in Figur 1 dargestellte Gelenk weist eine Innennabe 1, eine Außennabe 2, einen zwischen der Innennabe 1 und der Außennabe 2 geführten Käfig 3 sowie ein Mitnehmergehäuse 4 auf. Die Innennabe 1 und das Mitnehmergehäuse 4 sind dabei jeweils zur Anbindung eines treibenden oder anzutreibenden Bauteils ausgebildet. So ist die Innennabe 1 mit einem hülsenartigen Abschnitt 5, der zur drehfesten Anbindung eines Wellenzapfens oder dgl. mit einer Verzahnung 6 versehen ist, ausgestattet und das Mitnehmergehäuse 4 ist mit einem Verbindungsbereich 7 versehen, über welchen eine Hohlwelle (nicht dargestellt) mit dem Mitnehmergehäuse 4 verschweißt werden kann.

Der Innendurchmesser des Verbindungsbereichs 7 des Mitnehmergehäuses 4 ist dabei nicht kleiner als der Außendurchmesser der Innennabe 1. Somit kann die Innennabe 1 bei einer Zerstörung des Gelenks mit einem daran angebundenen Bauteil teleskopartig in den Verbindungsbereich 7 des Mitnehmergehäuses 4 geschoben werden.

Die Außennabe 2 weist in den dargestellten Ausführungsformen ein ringartiges inneres Element 8 sowie ein aus zwei Formteilen 9a, 9b bestehendes Dämpfungselement aus einem elastisch verformbaren Material, bspw. Kunststoff, auf. Dieses kann bei anderen Ausführungsformen auch ersatzlos entfallen. Dabei umgreifen die beiden Formteile 9a, 9b des Dämpfungselements das innere Element 8 von außen und an den Stirnseiten. Das innere Element 8 und das Dämpfungselement weisen zur Drehmomentübertragung jeweils eine Profilierung auf, wobei die Innenkontur des Mitnehmergehäuses 4, das das Dämpfungselement mit dem inneren Element 8 umgreift, mit einer entsprechenden Profilierung ausgebildet ist.

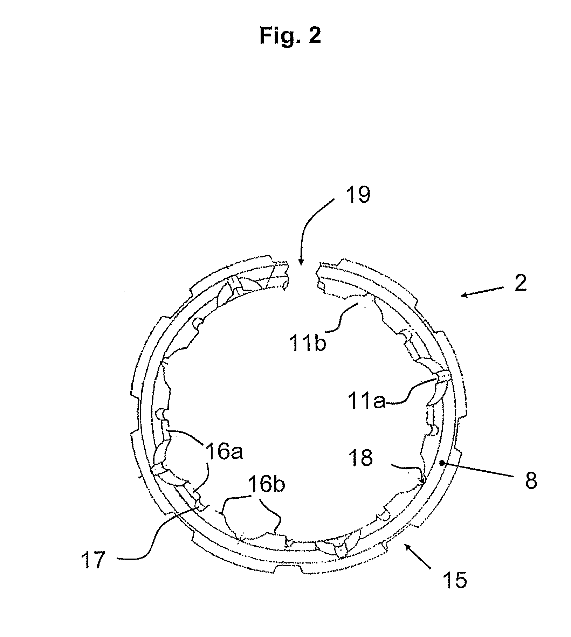

Auf der Innen nabe 1 sind erste und zweite innere Laufbahnen 10 und auf dem inneren Element 8 der Außennabe 2 sind erste und zweite äußere Laufbahnen 11 a, 11 b ausgebildet. Dabei sind die ersten Laufbahnen und die zweiten Laufbahnen einander paarweise zugeordnet. Wie aus Figur 2 ersichtlich, sind diese ersten und zweiten Laufbahnpaare abwechselnd um den Umfang des Gelenks verteilt angeordnet. In den dargestellten Ausführungsformen sind acht Laufbahnpaare in einem Gelenk vorgesehen, so dass erste Laufbahnpaare ersten Laufbahnpaaren gegenüberliegen und entsprechend zweite Laufbahnpaare zweiten Laufbahnpaaren gegenüberliegen. Daher sind in der Ansicht der Figur 1 nur erste Laufbahnpaare zu sehen.

Die Laufbahnpaare unterscheiden sich dadurch voneinander, dass sich der Bahngrund der ersten Laufbahnen in Figur 1 von links nach rechts voneinander entfernt, d.h. die ersten Laufbahnpaare öffnen sich in Richtung zu dem hülsenartigen Abschnitt 5. Dagegen entfernt sich der Bahngrund der zweiten Laufbahnen in entgegengesetzter Richtung voneinander, d.h. die zweiten Laufbahnpaare öffnen sich in Richtung zu dem Verbindungsbereich 7. Das in Figur 1 dargestellte Kugelgelenk ist somit ein Gegenbahngelenk, d.h. ein Festgelenk, das zwar ein Abwinkeln der Innennabe 1 gegenüber der Außennabe 2 gestattet, eine axiale Verschiebung dieser beiden Bauteile zueinander jedoch nicht zulässt. In jedem der Laufbahnpaare ist eine Kugel 12 zur Drehmomentübertragung aufgenommen. Die Kugeln sind dabei in dem Käfig 3 gehalten.

Weiter sind die in den Figuren gezeigten Gelenke jeweils mit einem Balg 14 ausgestattet, der das Gelenk zwischen der Innennabe 1 und der Außennabe 2 auf der Seite des hülsenartigen Abschnitts 5 abdichtet. Auf der gegenüberliegenden Seite des Gelenks ist ein Deckel vorgesehen, der in dem Mitnehmergehäuse 4 aufgenommen ist.

Das Gelenk nach Figur 1 besitzt zusätzlich eine Kappe 13, die das Mitnehmergehäuse 4 umgreift. Diese Kappe 13 dient als ein Befestigungselement zum Fixieren des Mitnehmergehäuses 4, der beiden Formteile 9a, 9b des Dämpfungselements, des inneren Elements 8 sowie des Balgs 14 aneinander.

Die in Figur 2 dargestellte Außennabe 2 bzw. deren inneres Element 8 weist an dem Außenumfang Vertiefungen 15 zur Drehmomentübertragung auf, die in eine entsprechende Profilierung des Dämpfungselements (soweit vorhanden) bzw. des Mitnehmergehäuses 4 eingreifen. Weiter sind auf der Innenseite der Außennabe 2 zwischen den Laufbahnen 11a und 11b erste und zweite Käfigführungsflächen 16a, 16b vorgesehen. In der dargestellten Ausführungsform sind sowohl zwischen den Käfigzentrierungsflächen 16a, 16b als auch im Bahngrund der Laufbahnen 11a, 11b jeweils Kerben 17 bzw. 18 vorgesehen, die zusammen mit den Wandstärkenverringerungen durch die Vertiefungen 15 bzw. die Laufbahnen Sollbruchstellen des inneren Elements 8 der Außennabe 2 bilden.

Wie in Figur 2 gezeigt, wird die Außennabe 2 bei Auftreten einer axialen Kraft von beispielsweise etwa 10 KN bis etwa 40 KN an einer Stelle definiert zu Bruch gebracht. Hierdurch entsteht ein etwa radial verlaufender Riss 19 in der Außennabe. Das in Figur 2 nicht gezeigte Mitnehmergehäuse hält die Außennabe in ihrer Position, so dass die Innennabe durch die Außennabe durchtauchen kann. Eine Zerstörung der Innennabe, des Käfigs und/oder der Kugeln oder gar ein Blockieren des gesamten Gelenks tritt hierbei nicht auf. Der Riss 19 tritt in dem in Figur 2 gezeigten Augenblick der maximalen auf das Gelenk wirkenden Kraft auf und öffnet sich nur für eine kurze Zeit. Nach dem Durchgleiten der Innennabe durch die Außennabe geht die Außennabe wieder zusammen, so dass sich der Riss 19 zumindest teilsweise wieder schließt.

## Patentansprüche

1. Antriebsgelenlt zur dreh- und axialfesten, jedoch eine begrenzte Winkelbewegung zulassenden Verbindung zwischen zwei Bauteilen, insbesondere im Antriebsstrang eines Kraftfahrzeuges, mit einer Innennabe (1) als Gelenkinnenteil, einer Außennabe (2) als Gelenkaußenteil sowie zwischen diesen vorgesehenen Drehmomentübertragungsmitteln (12) als weitere Gelenkteile,
**dadurch gekennzeichnet,**
**dass** das Gelenk derart ausgebildet ist, dass die Außennabe (2) bei Überschreiten einer bestimmten Axialkraft auf das Antriebsgelenk nur an einer Stelle, welche als Sollbruchstelle ausgestaltet ist, derart vollständig durchbricht, dass ein zumindest näherungsweise in radialer Richtung verlaufender Riss (19) in der Außennabe (2) entsteht, der ein Ausrasten der Innennabe (1) aus der Außennabe (2) ermöglicht, wobei die Außennabe (2) beim Überschreiten der bestimmten Axialkraft auf das Antriebsgelenk im Übrigen sich aufweitet,
und
**dass** das Gelenk derart ausgebildet ist, dass sich der Riss (19) in der Außennabe (2) nach dem Ausrasten der Innennabe (1) aus der Außennabe (2) wieder schließt.

2. Antriebsgelenk nach Anspruch 1, **dadurch gekennzeichnet, dass** zumindest die Außennabe (2) in einem diese wenigstens bereichsweise umgreifenden Mitnehmergehäuse (4) aufgenommen ist, wobei das Mitnehmergehäuse derart ausgebildet ist, dass es sich während des Ausrastens der Innennabe (1) aus der Außennabe (2) aufweitet.

3. Antriebsgelenk nach Anspruch 1 oder 2, **dadurch gekennzeichnet, dass** zumindest die Außennabe (2) in einem diese wenigstens bereichsweise umgreifenden Mitnehmergehäuse (4) aufgenommen ist, wobei das Mitnehmergehäuse (4) derart ausgebildet ist, dass es während des Ausrastens der Innennabe (1) aus der Außennabe (2) nicht zerbricht.

4. Antriebsgelenk nach einem der vorhergehenden Ansprüche, **dadurch gekennzeichnet, dass** die Sollbruchstelle durch eine zur Drehmomentübertragung dienende Profilierung und/oder wenigstens eine Kerbstelle (17, 18) der Außennabe (2) gebildet ist.

5. Antriebsgelenk nach einem der vorhergehenden Ansprüche, **dadurch gekennzeichnet, dass** die Außennabe (2) derart ausgebildet ist, dass sie sich zusätzlich zu dem wenigstens einen Riss (19) bei Überschreiten einer bestimmten Axialkraft auf das Antriebsgelenk derart aufweitet, dass die Innennabe (1) zusammen mit den Drehmomentübertragungsmitteln (12) aus der Außennabe (2) ausrasten kann.

6. Antriebsgelenk nach einem der vorhergehenden Ansprüche, **dadurch gekennzeichnet, dass** das Gelenk derart ausgebildet ist, dass die Innennabe (1) und die Drehmomentübertragungsmittel (12) zerstörungsfrei aus der Außennabe (2) ausrasten.

7. Antriebsgelenk nach einem der vorhergehenden Ansprüche, **dadurch gekennzeichnet, dass** die Außennabe (2) bei einer Axialkraft zwischen etwa 7 kN und etwa 60 kN bricht.

8. Antriebsgelenk nach einem der vorhergehenden Ansprüche, das als ein Festgelenk, insbesondere als ein Gegenbahngelenk ausgebildet ist.

9. Gelenkwelle mit wenigsten einem Antriebsgelenk nach einem der vorhergehenden Ansprüche.

## Claims

1. Drive joint for connection, which is rotationally and axially fixed but permits a limited angular movement, between two components, in particular in the drive train of a motor vehicle, having an inner hub (1) as joint inner part, an outer hub (2) as joint outer part, and torque transmission means (12) which are provided between them as further joint parts, **characterized in that** the joint is configured in such a way that, if a defined axial force on the drive joint is exceeded, the outer hub (2) breaks completely in two only at one point which is configured as a predetermined break point, in such a way that in the outer hub (2) a fracture (19) is produced which runs at least approximately in the radial direction and makes it possible for the inner hub (1) to be released from the outer hub (2), the outer hub (2) incidentally widening if the defined axial force on the drive joint is exceeded, and **in that** the joint is configured in such a way that the fracture (19) in the outer hub (2) closes again after the inner hub (1) is released from the outer hub (2).

2. Drive joint according to Claim 1, **characterized in that** at least the outer hub (2) is received in a driver housing (4) which reaches around the said outer hub (2) at least in regions, the driver housing being configured in such a way that it widens during the release of the inner hub (1) from the outer hub (2).

3. Drive joint according to Claim 1 or 2, **characterized in that** at least the outer hub (2) is received in a driver housing (4) which reaches around the said outer hub (2) at least in regions, the driver housing (4) being configured in such a way that it does not break during the release of the inner hub (1) from the outer hub (2).

4. Drive joint according to one of the preceding claims, **characterized in that** the predetermined break point is formed by a profiling which serves for torque transmission and/or at least one notched point (17, 18) of the outer hub (2).

5. Drive joint according to one of the preceding claims, **characterized in that** the outer hub (2) is configured in such a way that, in addition to the at least one fracture (19) if a defined axial force on the drive joint is exceeded, it widens in such a way that the inner hub (1) can be released together with the torque transmission means (12) from the outer hub (2).

6. Drive joint according to one of the preceding claims, **characterized in that** the joint is configured in such a way that the inner hub (1) and the torque transmission means (12) are released from the outer hub (2) in a destruction-free manner.

7. Drive joint according to one of the preceding claims, **characterized in that** the outer hub (2) breaks at an axial force between approximately 7 kN and approximately 60 kN.

8. Drive joint according to one of the preceding claims which is configured as a fixed joint, in particular as a counter track joint.

9. Articulated shaft having at least one drive joint according to one of the preceding claims.

## Revendications

1. Joint articulé d'entraînement pour la connexion solidaire axialement et en rotation, mais permettant un mouvement angulaire limité, entre deux composants, en particulier dans la chaîne cinématique d'un véhicule automobile, comprenant un moyeu interne (1) en tant que partie interne du joint articulé, un moyeu externe (2) en tant que partie externe du joint articulé, ainsi que des moyens de transfert de couple (12) en tant que parties supplémentaires du joint articulé prévus entre ceux-ci,
**caractérisé en ce que**
lie joint articulé est réalisé de telle sorte que le moyeu externe (2), dans le cas d'un dépassement d'une force axiale déterminée sur le joint articulé d'entraînement, se casse complètement uniquement en une zone qui est configurée sous forme de zone destinée à la rupture de telle sorte qu'une fissure (19) s'étendant au moins approximativement dans la direction radiale soit produite dans le moyeu externe (2), laquelle permet un désencliquetage du moyeu interne (1) hors du moyeu externe (2), le moyeu externe (2), lors du dépassement de la force axiale déterminée sur le joint articulé d'entraînement, s'élargissant par ailleurs, et
**en ce que** le joint articulé est réalisé de telle sorte que la fissure (19) dans le moyeu externe (2) se referme à nouveau après le désencliquetage du moyeu interne (1) hors du moyeu externe (2).

2. Joint articulé d'entraînement selon la revendication 1, **caractérisé en ce qu'** au moins le moyeu externe (2) est reçu dans un boîtier d'entraînement (4) venant en prise au moins en partie autour de celui-ci, le boîtier d'entraînement étant réalisé de telle sorte qu'il s'élargisse pendant le désencliquetage du moyeu interne (1) hors du moyeu externe (2).

3. Joint articulé d'entraînement selon la revendication 1 ou 2, **caractérisé en ce qu'**au moins le moyeu externe (2) est reçu dans un boîtier d'entraînement (4) venant en prise au moins en partie autour de celui-ci, le boîtier d'entraînement (4) étant réalisé de telle sorte qu'il ne se rompe pas pendant le désencliquetage du moyeu interne (1) hors du moyeu externe (2).

4. Joint articulé d'entraînement selon l'une quelconque des revendications précédentes, **caractérisé en ce que** la zone destinée à la rupture est formée par un profilage servant au transfert de couple et/ou par au moins une zone d'entaille (17, 18) du moyeu externe (2).

5. Joint articulé d'entraînement selon l'une quelconque des revendications précédentes, **caractérisé en ce que** le moyeu externe (2) est réalisé de telle sorte qu'il s'élargisse en plus de l'au moins une fissure (19) lors du dépassement d'une force axiale déterminée sur le joint articulé d'entraînement de telle sorte que le moyeu interne (1) puisse se désencliqueter du moyeu externe (2) conjointement avec les moyens de transfert de couple (12).

6. Joint articulé d'entraînement selon l'une quelconque des revendications précédentes, **caractérisé en ce que** le joint articulé est réalisé de telle sorte que le moyeu interne (1) et les moyens de transfert de couple (12) se désencliquètent du moyeu externe (2) sans destruction.

7. Joint articulé d'entraînement selon l'une quelconque des revendications précédentes, **caractérisé en ce que** le moyeu externe (2) se rompt sous l'effet d'une force axiale comprise entre environ 7 kN et environ 60 kN.

8. Joint articulé d'entraînement selon l'une quelconque des revendications précédentes, **caractérisé en ce qu'**il est réalisé sous forme de joint articulé fixe, en particulier sous forme de joint articulé à contre-voie.

9. Arbre articulé comprenant au moins un joint articulé d'entraînement selon l'une quelconque des revendications précédentes.
